# EUROPÄISCHE PATENTSCHRIFT

(11) **EP 1 380 692 B1**
(45) Veröffentlichungstag und Bekanntmachung des Hinweises auf die Patenterteilung: **04.10.2006**
(21) Anmeldenummer: 03012973.8
(22) Anmeldetag: 07.06.2003
(51) Int. Cl.: E01C 23/09, B32B 11/04, B32B 11/08, B32B 11/10

(54) **Bitumenfugenband**
Bituminous joint strip
Bande de jointoiement en bitume

(30) Priorität: 27.06.2002 DE 20209974 U
(43) Veröffentlichungstag der Anmeldung: 14.01.2004
(73) Patentinhaber: DENSO-Holding GmbH & Co., 51371 Leverkusen (DE)
(72) Erfinder: Gebhards, Gerhard, 40764 Langenfeld (DE); Tunger, Hanns-Walter, 42699 Solingen (DE)
(74) Vertreter: Maxton Langmaack & Partner

(56) Entgegenhaltungen:
- DE-A- 19 603 896
- DE-U- 20 002 475

## Beschreibung

Die Erfindung betrifft ein Bitumenfugenband zur Verwendung im Straßenbau zum Schließen von Fugen in Deckschichten aus Asphalt.

Deckschichten im Straßenbau im Rahmen der vorliegenden Erfindung sind beispielsweise befestigte Flächen im Straßen-, Tief-, Hoch- und Kanalbau. Üblicherweise ist eine Straße aus mehreren Schichten, z.B. eine unten liegende Tragschicht, darüber eine Binderschicht und obenauf eine Deckschicht aufgebaut. Die Deckschicht wird in der Regel mit einem Gefälle quer zur Straßenführung zur Ableitung des Oberflächenwassers verlegt werden. Bei herkömmlichen Straßendecken besteht zumindest die Deckschicht aus einem wasserundurchlässigen Material wie beispielsweise Asphalt.

Nähte und Anschlüsse in der Deckschicht entstehen beispielsweise beim Zusammenstoßen verschiedener Deckschichtabschnitte, die durch zeitlich versetzte Erstellung, beispielsweise bei Reparaturen und beim Schließen von Leitungsgräben oder durch die Aufteilung großer, nicht in einem Arbeitsgang herstellbarer Straßenflächen in kleinere Teilabschnitte entstehen. Die Aufteilung in kleinere Teilabschnitte kann auch durch die begrenzte Breite des Deckenfertigers verursacht werden. Auch bei der Anpassung von Einbauten, wie Abdeckungen von Abwasseranschlüssen (Kanaldeckel, Schieberklappen) und bei Randeinfassungen entstehen solche Nähte oder Anschlüsse.

Dabei versteht man unter Nähten den Verbund von nebeneinanderliegenden Einbauten aus Mischgut mit vergleichbaren Eigenschaften und unter Anschlüssen den Verbund von Einbaubahnen mit unterschiedlichen Eigenschaften. Nähte und Anschlüsse sind Beanspruchungen aus Verkehr und Klima ausgesetzt. Die Anforderungen an solche Verbindungen sind hoch, sie sollen wasserdicht sein und Bewegungen aufnehmen und sich unter Einwirkung von Verkehr und Klima nicht öffnen. Um das spätere Öffnen der Verbindungsstelle in der Deckschicht zu vermeiden, muss diese entsprechend ausgebildet werden. Besonders bei Anschlüssen soll die Fuge ein nachgiebiges, Bewegungen aufnehmendes Gelenk darstellen. Diese Fugen können mit geeigneten Vergussmassen gefüllt werden.

Die Weiterentwicklung hat dazu geführt, in den Fugen zwischen den Flanken der Deckschichtabschnitte Fugenbänder einzusetzen, die bei Asphaltdeckschichten als Bitumenfugenbänder ausgebildet sind. Der dichte Anschluss der Fugenbänder an eine Flanke der zusammenstoßenden Deckschichtabschnitte wird entweder beim "heißen Arbeiten" durch Anschmelzen der Oberflächen oder bei "kaltem Arbeiten" durch Ankleben mittels geeigneter Klebstoffe bewerkstelligt, wobei die Klebstoffe ein- oder zweiseitig auf die Flanken des Bitumenfugenbandes aufgebracht werden können. Die Anbindung an die andere Flanke des Bitumenfugenbands entsteht üblicherweise durch Gegenarbeiten mit heißem Asphalt.

Die neuere Entwicklung im Straßenbau hat zur Verwendung offenporiger Asphalte für die Deckschicht geführt. Solche Deckschichten sind wasserdurchlässig, während darunter die Bindeschicht zumindest an der Oberfläche wasserundurchlässig als Sperrschicht ausgebildet ist. Straßen mit offenporigen Deckschichten entwässern in der Deckschicht und wirken zudem schallabsorbierend. Diese werden als "Drän- oder Flüsterasphalt" bezeichnet.

Bitumenfugenbänder sind bereits aus DE 19 65 092 A1, DE 196 03 896 A1, DE 197 43 166 A1 und DE 199 39 372 A1 bekannt.

Das technische Problem der Erfindung liegt darin, Fugenbänder zu entwickeln, die einen stabilen und dauerhaften Verbund der angrenzenden Deckschichtabschnitte und gleichzeitig das Abfließen des Drainagewassers bei Deckschichten aus offenporigem Asphalt ermöglichen.

Herkömmliche Bitumenfugenbänder sind wasserundurchlässig und stören dadurch die Drainagefunktion der Deckschicht.

Das Problem wird durch die Merkmale des Anspruchs 1 gelöst.

Das erfindungsgemäße Bitumenfugenband ist dadurch gekennzeichnet, dass der in Einbaulage obere Teil des Bitumenfugenbandes aus einem wasserundurchlässigen, bitumenhaltigen Material und der untere Teil des Bitumenfugenbandes aus einem wasserdurchlässigen Material besteht.

Das erfindungsgemäße Fugenband bildet einen stabilen und dauerhaften Verbund mit den angrenzenden Deckschichtabschnitten und ermöglicht gleichzeitig das Abfließen des Drainagewassers innerhalb der Deckschichten. Diese Eigenschaft des erfindungsgemäßen Fugenbandes ist bei einer Anwendung bei Deckschichten aus offenporigem Asphalt erforderlich.

Bitumenhaltiges Material im Rahmen der vorliegenden Erfindung ist im allgemeinen eine Mischung aus polymermodifiziertem Bitumen, insbesondere Straßenbaubitumen mit mineralischen Füllstoffen und Faseranteilen (Asphalt im Straßenbau, Verlag für Bauwesen, Seite 31 (1998)).

Bevorzugtes bitumenhaltiges Material ist Straßenbaubitumen gemäß DIN EN 12591 mit einer Penetration im Bereich von 50 bis 300 mm⁻¹, bevorzugt im Bereich von 70 bis 220⁻¹ bei 25 °C nach EN 1426.

Bitumenhaltiges Material für die vorliegende Erfindung ist bei sachgerechter und fehlerlosen Anwendung praktisch undurchlässig für Wasser.

Wasserdurchlässiges Material im Rahmen der vorliegenden Erfindung ist in seiner Struktur so geformt, dass es Löcher und Durchgänge für Wasser aufweist. Vorzugsweise seien Gitterstrukturen, wie Kunststoffgitter und Metallgitter, grobporiger Schaumstoff, grobporiges Gewebe oder Geflecht, Wirrgeflecht, in Einbaulage zu der Deckschicht senkrecht stehende Elemente, wie z.B. Stifte, oder Vliese genannt. Solche Materialien sind an sich bekannt.

Als wasserdurchlässiges Material werden Gitterstrukturen und Stifte bevorzugt.

Das wasserundurchlässige Material stellt bevorzugt einen integrierten Anschluss an den oberen Teil der Deckschicht einer Straße her.

In dem erfindungsgemäßen Fugenband hat das wasserundurchlässige Material im allgemeinen eine Dicke im Bereich von 5 bis 20 mm, bevorzugt im Bereich von 8 bis 15 mm.

Die Höhe und Dicke des erfindungsgemäßen Fugenbandes hängt wesentlich von der Anwendung ab.

In einer bevorzugten Anwendungsform der vorliegenden Erfindung wird das erfindungsgemäße Fugenband zum Verbund von zwei angrenzenden Abschnitten einer Deckschicht eingesetzt. In diesem Fall wird zuerst die erste Deckschicht aufgetragen oder eine bestehende ältere Deckschicht z.B. von einer reparaturbedürftigen Deckschicht abgetrennt. An die Flanke der bestehenden Deckschicht wird das erfindungsgemäße Fugenband montiert. Daraufhin wird die zweite Deckschicht aufgetragen, die jetzt an das Fugenband angrenzt.

Bevorzugt ist hierbei, wenn zumindest eine Flanke des wasserundurchlässigen, bitumenhaltigen Materials so gestaltet ist, dass sie eine selbstklebende Schicht aufweist und an die umgebende Deckschicht geklebt wird.

Alternativ wird bevorzugt, wenn das wasserundurchlässige, bitumenhaltige Material an die Flanken der umgebende Deckschicht angeschmolzen wird. Dies kann beispielsweise durch Wärmezufuhr geschehen.

Die Höhe des wasserundurchlässigen Materials entspricht dabei in der Höhe dem oberen Teil der Fuge und die Dicke der Breite der Fuge. Vorzugsweise weisen die erfindungsgemäßen Fugenbänder zum Verschließen von Fugen eine Höhe des wasserundurchlässigen Teils von etwa 10 bis 30 mm auf.

Vor der Anbringung des erfindungsgemäßen Fugenbandes wird der Untergrund sorgfältig gesäubert und mit einem Primer gestrichen. Als Primer kommen beispielsweise Lösungen von Harzen, Polymeren und / oder Bitumenzubereitungen in Frage. Danach wird das Fugenband angebracht und zusammen mit dem Aufbau der Deckschicht festgewalzt.

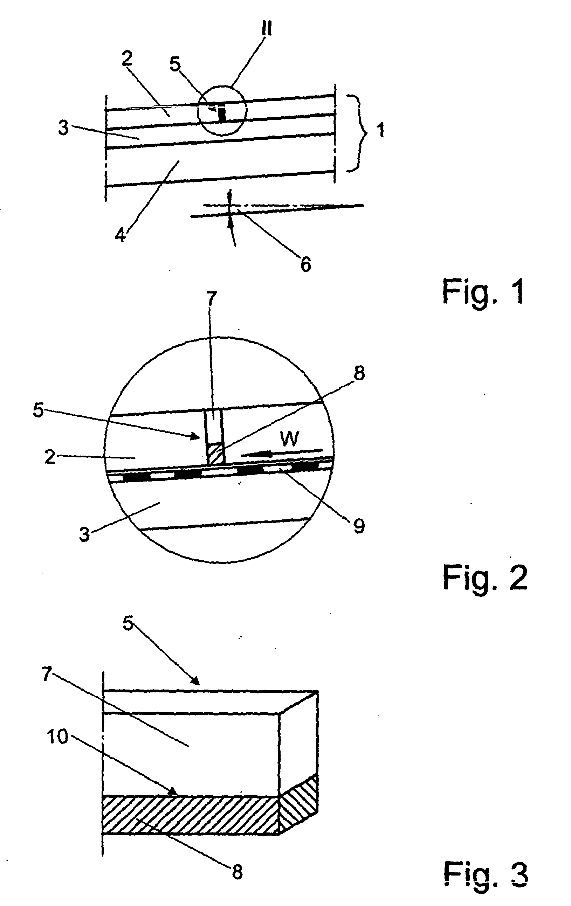

### Die vorliegende Erfindung soll anhand der Figuren 1 bis 3 erläutert werden:

Hierbei zeigt Figur 1 den prinzipiellen Aufbau einer Straßendecke, Figur 2 einen Ausschnitt aus Figur 1 in vergrößertem Maßstab und Figur 3 ein Fugenband perspektivisch in vergrößertem Maßstab.

In Figur 1 ist in einer prinzipiellen Darstellung der Aufbau einer Straßendecke 1 abgebildet. Darin bildet die Deckschicht 2 die oberste Lage, die Binderschicht 3 die darunterliegende und die Tragschicht 4 die untenliegende Schicht. Die Straßendecke ist mit einem Gefälle 6 verlegt, wobei das Gefälle quer zur Längserstreckung der Straßendecke ausgebildet ist. In der Deckschicht 2 ist der Einbau eines Fugenbandes 5 dargestellt, das zwischen aneinandergrenzenden Abschnitten der Deckschicht 2 im wesentlichen senkrecht zum Straßengefälle angeordnet ist. Übliche Stärken der Deckschicht 2 und damit Höhen des Fugenbandes liegen bei 30 bis 50 mm. Die Stärke der Binderschicht 3 ist in der Regel etwa 40 mm und die der Tragschicht 4 etwa 80 bis 120 mm. Das Straßengefälle 6 beträgt üblicherweise etwa 2,5° und kann von der Straßenmitte in beiden Richtungen zum Straßenrand hin verlaufen.

In Figur 2 ist der Ausschnitt II aus Figur 1 in vergrößertem Maßstab dargestellt. Das Fugenband 5 weist einen oberen Teil 7 und einen unteren Teil 8 auf und erstreckt sich von der Oberkante der Binderschicht 3 bis zur Oberkante der Deckschicht 2. Die Oberkante der Binderschicht 3 kann in Straßendecken mit offenporiger Deckschicht 2 als Sperrschicht 9 wasserundurchlässig ausgebildet sein. Auf der wasserundurchlässigen Oberkante der Binderschicht 3 bzw. der Sperrschicht 9 läuft der Wasserfluss W in Richtung des Straßengefälles ab. Das sich im unteren Teil der Deckschicht 2 sammelnde und abfließende Drainagewasser kann durch den unteren Teil 8 des Fugenbandes 5, der wasserdurchlässig ist, hindurch zum Straßenrand fließen.

In Figur 3 ist ein Abschnitt eines Fugenbandes 5 perspektivisch in vergrößertem Maßstab dargestellt. Der untere Teil 8 des Fugenbandes 5 ist integriert an den oberen Teil 7 angeschlossen. Die Ausbildung des integrierten Anschlusses 10 ist der Qualität der für den oberen und unteren Teil des Fugenbandes verwendeten Materialien angepasst. Die Dicke des Fugenbandes 5 beträgt üblicherweise 5 bis 20 mm.

Die Sperrschicht 9 kann entweder durch auf die Binderschicht 3 aufgegossenes wasserundurchlässiges Material oder durch aufgelegte separate Bahnen gebildet werden. Die an den angrenzenden Deckschichtabschnitten anliegenden Flanken des Fugenbandes 5 können bei Verwendung eines thermoplastischen Materials für den oberen Teil 7 des Fugenbandes 5 angeschmolzen und somit stabil und dauerhaft mit den Flanken der angrenzenden Deckschichtabschnitte verbunden werden. Diese Verbindung kann auch durch auf mindestens eine Flanke des Fugenbandes 5 aufgebrachte selbstklebende Schichten bewerkstelligt werden. Damit sind die erfindungsgemäßen Bitumenfugenbänder sowohl für den heißen als auch für den kalten Einbau einsetzbar.

Das erfindungsgemäße Bitumenfugenband hat den Vorteil, dass durch den oberen Teil der stabile Verbund der angrenzenden Deckschichtabschnitte und durch den unteren Teil das Abfließen des Drainagewassers in Deckschichten aus offenporigem Asphalt sichergestellt wird.

### Bezugszeichenliste

- 1: Straßendecke
- 2: Deckschicht
- 3: Binderschicht
- 4: Tragschicht
- 5: Fugenband
- 6: Straßengefälle
- 7: oberer Teil Fugenband
- 8: unterer Teil Fugenband
- 9: Sperrschicht
- 10: integrierter Anschluss zwischen oberem und unterem Teil des Fugenbandes
- W: Wasserabfluss

## Patentansprüche

1. Bitumenfugenband zur Verwendung in Straßenbau zur Schließung von Fugen, **dadurch gekennzeichnet, dass** der in Einbaulage obere Teil (7) des Bitumenfugenbandes (5) aus einem wasserundurchlässigen, bitumenhaltigen Material und der untere Teil (8) des Bitumenfugenbandes (5) aus einem wasserdurchlässigen Material besteht.

2. Bitumenfugenband nach Anspruch 1, **dadurch gekennzeichnet, dass** das wasserdurchlässige Material einen integrierten Anschluss an den oberen Teil (7) aufweist und aus einem Material der Gruppe aus Gitterstrukturen, grobporiger Schaumstoff, grobporiges Gewebe oder Geflecht, Wirrgeflecht, in Einbaulage zur Straßendeckschicht senkrecht stehende Elemente oder Vliese besteht.

3. Bitumenfugenband nach einem der Ansprüche 1 oder 2, **dadurch gekennzeichnet, dass** zumindest eine Flanke des Fugenbandes (5) eine selbstklebende Schicht aufweist.

4. Verfahren zur Verlegung eines Bitumenfugenbandes (5) nach einem der Ansprüche 1 bis 3, **dadurch gekennzeichnet, dass** das wasserundurchlässige, bitumenhaltige Material an die Flanken der umgebende Deckschicht (2) angeschmolzen wird.

5. Verwendung eines Bitumenfugenbandes (5) nach einem der Ansprüche 1 bis 3 zum Verschließen von Fugen, **dadurch gekennzeichnet, dass** der wasserundurchlässige obere Teil (7) eine Höhe von etwa 10 bis 30 mm aufweist.

## Claims

1. Bitumen joint tape for use in road construction for closing grooves, **characterized in that** that portion (7) of the bitumen joint tape being uppermost during installation consists of an impermeable material containing bitumen and that the lower portion (8) of the bitumen joint tape consists of a permeable material.

2. Bitumen joint tape according to claim 1, **characterized in that** the water-permeable material comprises an integrated connection to the upper portion (7) and that it consists of any of the material belonging to the group of bar structures, coarsely porous foam, coarsely porous tissue or mesh, unstructured mesh, elements in situ vertical to the road cover layer, or fleeces.

3. Bitumen joint tape according to one of claims 1 or 2, **characterized in that** at least one flange of the joint tape (5) comprises a self-adhesive layer.

4. Method for applying a bitumen joint tape (5) according to one of claims 1 to 3, **characterized in that** the water-impermeable material containing bitumen is melted at the flanges of the surrounding cover layer (2).

5. Use of a bitumen joint tape (5) according to one of claims 1 to 3 for closing grooves, **characterized in that** the water-impermeable upper portion (7) comprises a height of about 10 to 30 mms.

## Revendications

1. Bande d'étanchéité en bitume pour utilisation dans la construction de routes pour boucher des joints, **caractérisée en ce que** la partie supérieure (7) de la bande d'étanchéité en bitume (5) dans la position de montage est réalisée à partir d'un matériau à base de bitume imperméable à l'eau et la partie inférieure (8) de la bande d'étanchéité en bitume à partir d'un matériau perméable à l'eau.

2. Bande d'étanchéité en bitume selon la revendication 1, **caractérisée en ce que** le matériau perméable à l'eau présente un raccord intégré à la partie supérieure (7) et est un matériau du groupe des structures réticulaires, une mousse à macropores, un tissu ou un treillis à macropores, un treillis embrouillé, des éléments dans la position de montage verticaux par rapport à la couche de recouvrement de la route, ou un non-tissé.

3. Bande d'étanchéité en bitume selon l'une quelconque des revendications 1 ou 2, **caractérisée en ce qu'**au moins un flanc de la bande d'étanchéité (5) présente une couche autocollante.

4. Procédé de pose d'une bande d'étanchéité en bitume (5) selon l'une quelconque des revendications 1 à 3, **caractérisé en ce que** le matériau à base de bitume imperméable à l'eau est fondu aux flancs de la couche de recouvrement (3) entourante.

5. Utilisation d'une bande d'étanchéité en bitume (5) selon l'une quelconque des revendications 1 à 3 pour boucher des joints, **caractérisée en ce que** la partie supérieure (7) imperméable à l'eau présente une hauteur allant de 10 à 30 mm environ.
